# EUROPÄISCHE PATENTANMELDUNG

(11) **EP 0 895 203 A2**
(43) Veröffentlichungstag der Anmeldung: **03.02.1999**
(21) Anmeldenummer: 98112332.6
(22) Anmeldetag: 03.07.1998
(51) Int. Cl.: G07F 7/08, G07F 19/00, H04M 17/00

(54) **Vorrichtung in Form eines Kartenbediengerätes**

(30) Priorität: 30.07.1997 DE 19732762
(71) Anmelder: HAGENUK GMBH, D-24118 Kiel (DE)
(72) Erfinder: Aniol, Heinrich J., 24111 Kiel-Russee (DE); Gegg, Ralf, 65183 Wiesbaden (DE); Riechers, Jan, 22459 Hamburg (DE); Jerono, Winfried, Dr., 24229 Dänischenhagen (DE)
(74) Vertreter: Hansmann, Dierk, Dipl.-Ing.

(57) **Zusammenfassung**

Es wird ein Kartenbediengerät für Bank- oder Kreditkarten zur bargeldlosen Zahlung über ein Kartenlesegerät eines Zahlungsempfängers beschrieben, wobei die Karten über einen einen programmierbaren Mikroprozessor und einen Speicher aufweisenden elektronischen Chip mit einem gewünschten virtuellen Geldbetrag geladen und bei Zahlung eines Geldbetrages durch das Kartenlesegerät freigegeben werden und wobei der Speicher einen ROM-Bereich für ein Betriebssystem der Karte und einen EEPROM-Bereich zur Speicherung eines noch vorhandenen virtuellen Geldbetrages sowie weiterer variabler Werte wie Gültigkeitszeitraum, vorgenommenen Geld-Transaktionen und Codeschlüssel aufweist. Dabei ist ein Mobiltelefon und ein daran angeschlossenes Zusatzmodul zur Aufnahme der Karte vorgesehen, wobei über zugeordnete Funktionselemente des Mobiltelefons die Speicher der Karte für eine Zahlung freischaltbar bzw. sperrbar sind.

## Beschreibung

Die Erfindung betrifft eine Vorrichtung in Form eines Kartenbediengerätes für Bank- oder Kreditkarten zur bargeldlosen Zahlung über ein Kartenlesegerät eines Zahlungsempfängers, wobei die Karten über einen einen programmierbaren Mikroprozessor und einen Speicher aufweisenden elektronischen Chip mit einem gewünschten virtuellen Geldbetrag geladen und bei Zahlung eines Geldbetrages durch das Kartenlesegerät freigegeben werden und wobei der Speicher einen ROM-Bereich für ein Betriebssystem der Karte und einen EEPROM-Bereich zur Speicherung eines noch vorhandenen virtuellen Geldbetrages sowie weiterer variabler Werte wie Gültigkeits-Zeitraum, vorgenommenen Geld-Transaktionen und Codeschlüssel aufweist.

Bank- oder Kreditkarten (Scheckkarten) sind weit verbreitet. Mit diesen Karten ist eine bargeldlose Zahlung in fast jedem größeren Geschäft, in Restaurants, an Tankstellen, in Reisebüros usw. möglich. Ein Mitführen von großen Geldbeträgen ist somit nicht mehr erforderlich, so daß auch die damit verbundenen Gefahren (Diebstahl, Falschgeld) entfallen. Gerade dies hat den Bank- oder Kreditkarten zu großer Verbreitung verholfen. In dem Fall, in dem trotzdem einmal Bargeld benötigt wird, kann man dieses außerdem mit der Karte bei einem Bankautomaten abheben, wenn man eine Geheimzahl (PIN) eingibt. Außerdem werden auch sogenannte elektronische Geldbörsen in Kartenform umfänglich im Markt eingeführt.

Allerdings ist die Verwendung dieser Karten nicht ganz risikolos, auch wenn Unbefugte bei einem Verlust oder Diebstahl die Karte im allgemeinen nicht zum Geldabheben verwenden können, da nur der Inhaber die Geheimzahl kennt. Bis zum Sperren der Karte durch die betreffende Bank oder Kreditkartengesellschaft ist ein Mißbrauch jedoch trotzdem nicht auszuschließen.

Der Erfindung liegt die Aufgabe zugrunde, eine zur bargeldlosen Zahlung von Geldmitteln zu verwendende Bank- oder Kreditkarte der eingangs genannten Art in der Weise über eine Vorrichtung in Form eines Kartenbediengerätes zu sichern, daß der Inhaber bei einem Verlust der Karte wesentlich besser gegen Mißbrauch und Fälschung geschützt ist.

Gelöst wird diese Aufgabe mit einer Vorrichtung in Form eines Kartenbediengerätes, das sich dadurch auszeichnet, daß ein Mobiltelefon und ein daran angeschlossenes Zusatzmodul zur Aufnahme der Karte vorgesehen ist und über zugeordnete Funktionselemente des Mobiltelefons der Speicher der Karte für eine Zahlung freischaltbar bzw. sperrbar ist.

Ein Vorteil dieser Lösung besteht darin, daß das Zusatzmodul sehr klein, einfach und kostengünstig gehalten werden kann, da die Bedienungs- und Anzeigeelemente in Form der Tastatur und des Displays des Mobiltelefons zur Verfügung stehen.

Bei Zahlung eines Geldbetrages an einem Kassensystem wird die Karte durch das Kartenlesegerät für nur jeweils einen Abbuchungsvorgang freigegeben und anschließend automatisch bis zur nächsten Freigabe gesperrt. Das Nachladen der Karte über die Debit-Funktion am Bankautomaten bleibt davon unberührt, d.h. die Karte kann an einem Bankautomaten nachgeladen werden, ohne vorher durch das Kartenlesegerät freigeschaltet worden zu sein.

Das Zusatzmodul weist vorzugsweise mindestens eine Einheit zur jeweiligen Authentifizierung gegenüber einer zugeordneten Bank- oder Kreditkarte auf.

In dem Zusatzmodul können ferner eine Mehrzahl von Anwendungsfunktionen wie Lesen und Anzeigen des mit der Karte verfügbaren Geldbetrages, Anzeigen der Transaktionen sowie Freischalten und Sperren der Karte mit Statusanzeige implementiert sein.

Das Zusatzmodul ist, wie bereits erwähnt wurde, vorzugsweise über die Tastatur des Mobiltelefons betreibbar, wobei die Anwendungsfunktionen auf dem Display des Mobiltelefons angezeigt werden.

Die Bank- oder Kreditkarte ist vorzugsweise über das erfindungsgemäße Kartenbediengerät mittels des Mobiltelefons mit einem zugeordneten Bankenrechner verbindbar und kann über diese Verbindung mit einem gewünschten virtuellen Geldbetrag aufgeladen werden (Debit-Funktion).

Dem Inhaber der Karte wird dadurch sogar der Weg zu einem Bankautomaten erspart.

In diesem Fall ist ferner vorzugsweise ein Zugangssystem vorgesehen, mit dem ein gegen unbefugten Zugriff gesicherter Telekommunikations-Zugang zu dem zugeordneten Bankenrechner realisiert wird.

Weiterhin kann ein Service Center vorgesehen sein, das von dem Mobiltelefon zur Verbindungsaufnahme mit dem zugeordneten Bankenrechner angewählt wird.

Das Service Center ist dabei vorzugsweise über eine kostenlose Servicenummer des Betreibers des Telekommunikationsnetzes anwählbar und als Schnittstelle zu mehreren Banken ausgeführt.

Alternativ kann das Service Center auch in jeweils ein Zugangssytem einer betreffenden Bank integriert sein.

Weitere Einzelheiten, Merkmale und Vorteile der Erfindung ergeben sich aus der nachfolgenden Beschreibung einer bevorzugten Ausführungsform anhand der Zeichnung. Es zeigt:
- Fig. 1: eine schematische Darstellung einer solchen Ausführungsform und
- Fig. 2: eine Datenübertragungskette zwischen einer Kreditkarte und einem zugeordneten Rechnersystem einer Bank.

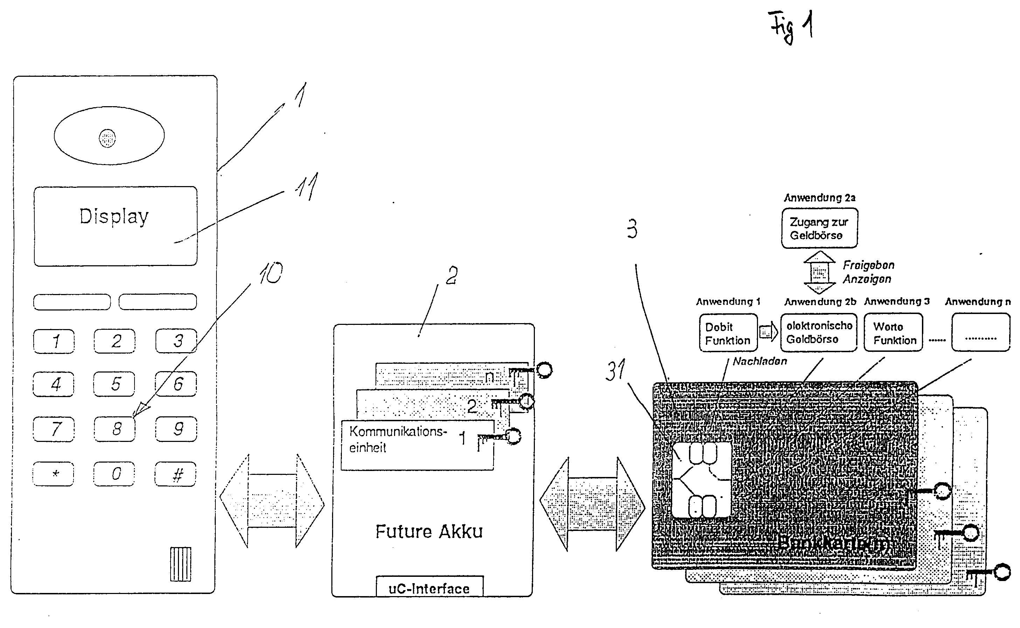

Gemäß Fig. 1 umfaßt eine solche Ausführungsform ein herkömmliches Mobiltelefon 1 mit Tastatur 10 und Display 11 sowie ein Zusatzmodul 2, das über eine Schnittstelle an das Mobiltelefon anschließbar ist. Beide Teile bilden zusammen ein Kartenbediengerät. In das Zusatzmodul 2, das auch einen Akkumulator zur Unterstützung der Stromversorgung des Mobiltelefons enthalten kann, wird eine Bank- oder Kreditkarte (Chipkarte) 3 eingeführt.

Die Karte 3 ist in Form einer Scheckkarte ausgeführt, auf der sich ein hochintegrierter, programmierbarer Mikroprozessor 31 mit Speicher befindet. Der Speicher teilt sich in einen ROM-Bereich für das Betriebssytem bzw. permanente Kartensoftwareteile, sowie einen EEPROM-Bereich zur Speicherung von verschiedenen variablen Werten, wie geladener Geldbetrag, Codeschlüssel, Protokoll von Transaktionen oder Gültigkeitszeiträumen auf. Der Mikroprozessor ermöglicht die aktive Durchführung von verschiedenen kryptographischen Verfahren und eine Beteiligung an Protokollen beim Datenaustausch mit Schreib-/Lesegeräten.

Die Karte 3 stellt eine elektronische Geldbörse dar und kann mit einem Bankautomaten über eine Debitfunktion mit einem virtuellen Geldbetrag, d.h. einem elektronischen Wert, der einem bestimmten Geldbetrag entspricht, aufgeladen werden, nachdem eine Authentifizierung mittels einer Geheimzahl (PIN) durchgeführt wurde. Die Verbindung zum Bankautomaten wird dabei Online durch Anwahl mittels des Mobiltelefons hergestellt.

Die Bezahlung erfolgt durch entsprechende Verminderung des (noch) auf der Karte vorhandenen Wertes, so daß dafür eine Online-Verbindung zu einem Hostrechner einer Bank sowie eine PIN-Abfrage nicht mehr erforderlich sind.

Um die Möglichkeit des Mißbrauchs der Karte weiter zu verringern, wird ein Abbuchungsvorgang mit dem Kartenbediengerät temporär freigeschaltet, indem die Karte zuvor in das mit dem Mobiltelefon 1 verbundene Zusatzmodul 2 eingesetzt und ein EEPROM-Speicherplatz beschrieben wird. Nach einem Abbuchungsvorgang wird dieser automatisch wieder gelöscht.

Ferner kann mit dem Kartenbediengerät der aktuell auf der Karte vorhandene Geldbetrag abgefragt und auf dem Display des Mobiltelefons zur Anzeige gebracht werden. Gleiches gilt für eine Abfrage der letzten Geldtransaktionen mit Betrag, Datum und Uhrzeit. Nach einer Abbuchung wird die Karte automatisch gesperrt, so daß vor einer erneuten Abbuchung wieder eine Freischaltung erforderlich ist.

Weitere, mit dem Kartenbediengerät über den Mikroprozessor 31 mit Speicher auszuführende Funktionen sind: Authentifizierung gegenüber der Anwendungsfunktion "elektronische Geldbörse" durch kryptologische Verfahren, wobei auch (mehrere) Codierungsschlüssel für verschiedene Karten gespeichert werden können, sowie Statusanzeige der elektronischen Geldbörse (abbuchbereit oder geschlossen).

Diese Funktionen werden durch das Einführen der Karte in das Zusatzmodul 2 nacheinander ausgelöst.

Jeder Funktion bzw. Anwendung ist ein Bereich des EEPROM zugewiesen, in dem Datenstrukturen mit einem bestimmten Schlüssel erstellt werden. Jede Anwendung wird von der Software des Kartenbediengerätes gesteuert, die über den zugehörigen Schlüssel verfügt und somit Zugriff nur auf diese Anwendung hat. Die Anwendungen sind also voneinander entkoppelt, wobei ein Zugang zu den Daten von außen nur mit dem geeigneten Schlüssel und entsprechenden Zugriffsrechten möglich ist.

Die Anwendung "Debit-Funktion" (Laden der Karte über Bankrechner) wird z.B. von der kartenausgebenden und kontoführenden Bank kontrolliert. Der Zugang erfolgt über Bankautomaten oder Point-of-sale Terminals.

Die Anwendung "Zugang zur Geldbörse" wird ebenfalls von der kartenausgebenden und kontoführenden Bank kontrolliert. Der Zugang erfolgt über das Kartenbediengerät, in dem ein kartenzugehöriger Schlüssel hinterlegt ist. Jeder Karte ist bei dem kartenausgebenden Kreditinstitut ein Schattenkonto zugeordnet, über das ermittelt werden kann, welcher Restbetrag zum Zeitpunkt von Verlust oder Defekt der Karte noch auf dem Chip verfügbar war.

Die Anwendung "elektronische Geldbörse" wird von dem Kartenbediengerät und einer Gemeinschaftsstruktur kontrolliert. Das geladene Zahlungsmittel wird anonym abgebucht und ist über die "Debit-Funktion" nachladbar. Über entsprechende Kartenlesegeräte, die separat oder als Teil von Automaten (Parkhaus, Fahrkarten usw.) ausgeführt sein können, kann somit ohne Eingabe einer persönlichen Geheimzahl (PIN) gezahlt werden. Dies bedeutet eine erhebliche Vereinfachung der Anwendung, ohne daß die Sicherheit für den Benutzer beeinträchtigt wird. Der Benutzer entscheidet nämlich selbst, wieviel Geld auf der Karte gespeichert und somit im Falle eines Verlustes der Karte im ungünstigsten Fall verloren gehen könnte.

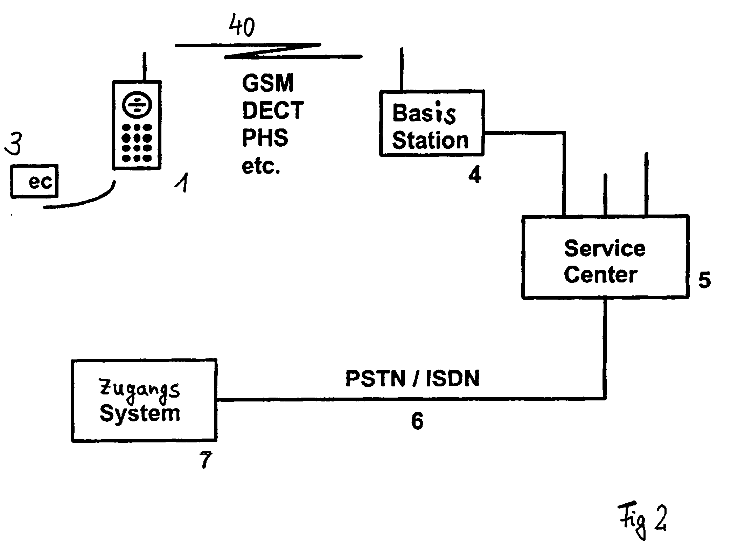

Figur 2 zeigt den prinzipiellen Aufbau einer Übertragungskette zwischen einem Benutzer und einem entsprechenden Rechnersystem einer Bank zur Benutzung der beschriebenen aktiven Bankkarten.

Diese Darstellung zeigt besonders deutlich, daß der Benutzer nicht auf fest installierte Bankautomaten angewiesen ist, um die Karte mit einem Geldbetrag aufzuladen oder Informationen über Transaktionen oder den auf der Karte verfügbaren Restbetrag abzurufen. Vielmehr sind alle diese Funktionen über das Mobiltelefon 1 ausführbar bzw. abrufbar. Die Funktionen werden menügeführt unter Verwendung des Displays und der Tastatur des Mobiltelefons 1 gesteuert. Die Daten werden verschlüsselt und gesichert über eine digitale Luftschnittstelle 40 (nach GSM-, DECT-, PHS- oder einem anderen Standard) zu einer entsprechenden Basisstation 4 übertragen, die über ein Service Center 5 und ein Telekommunikationsnetz (PSTN/ISDN-Leitung) 6 mit einem Zugangssystem 7 der betreffenden Bank verbunden ist.

Bei dem Zugangssystem 7 handelt es sich um einen gesicherten Telekommunikations-Zugang der entsprechenden Bank, über den die Verbindung des Service Centers 5 zu den Bankdaten des Benutzers realisiert wird. Das Service Center könnte natürlich auch direkt in der betreffenden Bank untergebracht sein.

Über das Mobiltelefon 1 ist ein Öffnen und Schließen der Bankkarte 3 möglich. Die Karte wird durch den Benutzer geschlossen, indem dieser auf der Tastatur des Handys einen Menüpunkt "Sperren der Bankkarte" anwählt und sich anschließend durch Eingabe der PIN autorisiert. Die Karte wird nun durch Übermittlung eines entsprechenden Steuerbefehls vom Mobiltelefon auf die Karte gesperrt. Dies erhöht die Sicherheit erheblich, da nun ein gespeicherter Betrag von einem Kassenautomaten nicht mehr abgebucht werden kann. In entsprechender Weise kann die Karte PIN-kontrolliert auch wieder geöffnet werden.

Zum Aufladen der Bankkarte 3 wird diese wiederum in das an das Mobiltelefon 1 angeschlossene Zusatzgerät 2 eingelegt und ein Menü "Aufladen der Bankkarte" ausgewählt. Das Mobiltelefon 2 baut nun zum Datenaustausch eine Funkverbindung über die Luftschnittstelle 40 zu der Basisstation 4 auf. Als Ziel wird von dem Mobiltelefon 1 eine fest vorgegebene Rufnummer angewählt, die entweder auf der Bankkarte gespeichert ist oder durch den Benutzer in das Mobiltelefon 1 einprogrammiert wird. Mit der Rufnummer wird der Zugang zu dem Service Center 5 des jeweiligen Netzbetreibers erreicht. Zweckmäßigerweise handelt es sich hierbei um eine Servicerufnummer (wie z.B. den 0180-Dienst der deutschen Telekom), über die eine für den Benutzer kostengünstige Verbindung hergestellt wird.

Nach dem Aufbau der Verbindung zum Service Center 5 authentifiziert sich der Benutzer mit der PIN über das Mobiltelefon 1 und beantragt die Ausführung der Anwendung "Aufladen der Bankkarte". Hierbei wird vom Benutzer der gewünschte Betrag über die Tastatur des Mobiltelefons 1 eingegeben. Anschließend werden die benötigten Daten von der Bankkarte 3 über das Mobiltelefon 1 dem Service Center 5 übermittelt.

Das Service Center 5 stellt daraufhin eine Verbindung mit dem entsprechenden Bankenrechner her, indem über ein beliebiges Telekommunikationsnetz 6 die Rufnummer des Zugangsystems 7 angewählt wird. Anschließend werden die benötigten Daten über die Identität, die Authentifikation und den Kontostand des Benutzers ausgetauscht.

Das Service Center 5 übermittelt dann der Bankkarte 3 über das Mobiltelefon 1 den neuen virtuellen Geldbetrag, der dem Benutzer zur Verfügung steht. Hierbei können optional auch weitere Daten, wie z.B. Kontostand o.ä. übermittelt werden.

Sofern beide Verbindungen von dem Service Center 5 fehlerfrei aufrechterhalten und betrieben werden konnten, erhalten die Bank und der Benutzer eine entsprechende Bestätigung hierüber. Nach Beendigung aller Anwendungen werden die Verbindungen wieder abgebaut. Wenn es bei der Übertragung der Daten zu Störungen gekommen ist, wird die Transaktion nicht ausgeführt und der Benutzer sowie die Bank darüber informiert.

Über die Anwendung "Aufladen der Bankkarte" kann der Benutzer menügeführt natürlich auch fremde Währungen laden, sofern diese von seiner Bank angeboten werden.

Das Service Center 5 kann entweder vom Netzbetreiber unterhalten werden und als Schnittstelle zu mehreren beteiligten Banken dienen. Alternativ kann es auch in das Zugangssystem einer Bank integriert und somit dieser direkt zugeordnet sein.

Der beschriebene drahtlose Betrieb einer Bankkarte (WCB - Wireless Controlled Bankcard) ist nicht nur über ein GSM-Mobiltelefon möglich. Es können vielmehr beliebige digitale Luftschnittstellen (z.B. nach dem DECT- oder PHS-Standard) verwendet werden.

Anstatt die Bankkarte in das Zusatzmodul einzulegen ist es z.B. auch möglich, die Karte durch einen Schlitz eines Leseschachtes zu ziehen und dabei jeweils Daten von der oder auf die Karte zu übertragen.

## Patentansprüche

1. Vorrichtung in Form eines Kartenbediengerätes für Bank- oder Kreditkarten zur bargeldlosen Zahlung über ein Kartenlesegerät eines Zahlungsempfängers, wobei die Karten über einen einen programmierbaren Mikroprozessor und einen Speicher aufweisenden elektronischen Chip mit einem gewünschten virtuellen Geldbetrag geladen und bei Zahlung eines Geldbetrages durch das Kartenlesegerät freigegeben werden und wobei der Speicher einen ROM-Bereich für ein Betriebssystem der Karte und einen EEPROM-Bereich zur Speicherung eines noch vorhandenen virtuellen Geldbetrages sowie weiterer variabler Werte wie Gültigkeitszeitraum, vorgenommenen Geld-Transaktionen und Codeschlüssel aufweist, dadurch gekennzeichnet, daß ein Mobiltelefon (1) und ein daran angeschlossenes Zusatzmodul (2) zur Aufnahme der Karte (3) vorgesehen ist und über zugeordnete Funktionselemente des Mobiltelefons (1) der Speicher der Karte (3) für eine Zahlung freischaltbar bzw. sperrbar ist.

2. Kartenbediengerät nach Anspruch 1, dadurch gekennzeichnet, daß das Zusatzmodul (2) mindestens eine Einheit zur jeweiligen Authentifizierung gegenüber einer zugeordneten Bank- oder Kreditkarte (3) aufweist.

3. Kartenbediengerät nach Anspruch 1 oder 2, dadurch gekennzeichnet, daß in dem Zusatzmodul (2) eine Mehrzahl von Anwendungsfunktionen wie Lesen und Anzeigen des mit der Karte (3) verfügbaren Geldbetrages, Anzeigen der Transaktionen sowie Freischalten und Sperren der Karte mit Statusanzeige implementiert ist.

4. Kartenbediengerät nach Anspruch 3, dadurch gekennzeichnet, daß das Zusatzmodul (2) über eine Tastatur (10) des Mobiltelefons (1) betreibbar ist, wobei die Anwendungsfunktionen auf einem Display (11) des Mobiltelefons (1) angezeigt werden.

5. Kartenbediengerät nach einem der Ansprüche 1 bis 4, dadurch gekennzeichnet, daß die Karte (3) mittels des Mobiltelefons (1) mit einem zugeordneten Bankenrechner verbindbar ist und über diese Verbindung mit einem gewünschten virtuellen Geldbetrag aufladbar ist (Debit-Funktion).

6. Kartenbediengerät nach Anspruch 5, dadurch gekennzeichnet, daß ein Zugangssystem (7) vorgesehen ist, mit dem ein gegen unbefugten Zugriff gesicherter Telekommunikations-Zugang zu dem zugeordneten Bankenrechner realisiert wird.

7. Kartenbediengerät nach Anspruch 5 oder 6, dadurch gekennzeichnet, daß ein Service Center (5) vorgesehen ist, das von dem Mobiltelefon (1) zur Verbindungsaufnahme mit dem zugeordneten Bankenrechner angewählt wird.

8. Kartenbediengerät nach Anspruch 7, dadurch gekennzeichnet, daß das Service Center (5) über eine kostenlose Servicenummer des Betreibers des Telekommunikationsnetzes anwählbar und als Schnittstelle zu mehreren Banken ausgeführt ist.

9. Kartenbediengerät nach Anspruch 7, dadurch gekennzeichnet, daß das Service Center (5) in das Zugangssytem (7) einer Bank integriert ist.

10. Kartenbediengerät nach Anspruch 1, dadurch gekennzeichnet, daß das Zusatzmodul (2) in das Mobiltelefon (1) integriert ist.
